Europäisches Patentamt

(19) European Patent Office

Office européen des brevets

(11) EP 0 520 826 B1

## (12) EUROPEAN PATENT SPECIFICATION

(45) Date of publication and mention
of the grant of the patent:
**20.03.1996 Bulletin 1996/12**

(51) Int. Cl.[6]: **C02F 1/68**

(21) Application number: **92305938.0**

(22) Date of filing: **26.06.1992**

(54) **Recarbonation of water**

Recarbonisierung von Wasser

Recarbonisation des eaux

(84) Designated Contracting States:
**BE DE FR GB IT NL SE**

(30) Priority: **28.06.1991 GB 9113971**

(43) Date of publication of application:
**30.12.1992 Bulletin 1992/53**

(73) Proprietor: **The BOC Group plc**
**Windlesham Surrey GU20 6HJ (GB)**

(72) Inventors:
- **Hanson, Cedric Charles**
  **Bradford, West Yorkshire, BD15 OJH (GB)**
- **Page, William James**
  **Chiswick, London, W4 (GB)**

(74) Representative: **Wickham, Michael et al**
**c/o Patent and Trademark Department**
**The BOC Group plc**
**Chertsey Road**
**Windlesham Surrey GU20 6HJ (GB)**

(56) References cited:
**EP-A- 0 187 432**      **DE-A- 1 955 571**
**DE-A- 2 725 010**

- **WORLD PATENTS INDEX LATEST Section Ch,**
  **Week 8816, Derwent Publications Ltd., London,**
  **GB, Class C, AN 88-109753**
- **'Mémento technique de l'eau' 1972 ,**
  **DEGRéMONT , PARIS, FR**

## Description

This invention relates to a method and apparatus for the treatment of water. In particular, it relates to a method of hardening potable or industrial water. The term 'hardening' as used herein includes within its scope a rehardening step in a water treatment comprising an upstream softening step.

It is typically found that soft potable or industrial water tends to be mildly corrosive. Accordingly, damage can be caused to any metal pipes that are in continuous use in a distribution system for the softened water. One known method of overcoming this problem is to perform a controlled hardening of the water using a solution of lime or other hardening agent and carbon dioxide. The carbon dioxide performs two functions. First, it reacts with the lime to form soluble calcium bicarbonate. Second, it provides a means of adjusting the pH of the water. The current commercial practice in Scandinavia is to use a solution of lime containing 0.1% by weight of lime. One major disadvantage of this practice is that a large storage capacity for the lime solution is required, adding greatly to the capital cost of the treatment plant. Nonetheless, it is able to be controlled so as to prevent there from being any significant propensity to deposit scale on the walls of pipes used to conduct the water in a water distribution system.

DE-A-1 955 571 describes a method of hardening water by adding to the water carbon dioxide and milk of lime as hardening agent.

It is an aim of the method according to the present invention to provide a method of hardening water which avoids the storage of dilute solutions of hardening agent such as lime.

According to the present invention there is provided a method of hardening water comprising introducing carbon dioxide into a stream of water at a controlled rate, forming a dispersion of carbon dioxide bubbles in the stream and allowing the bubbles to dissolve therein, introducing at a controlled rate an aqueous slurry of a hardening agent into the stream, the hardening agent being able to react with the carbon dioxide to form a soluble salt, and then introducing the resulting stream into a body of water to be hardened with sufficient momentum to disperse undissolved hardening agent into the body of water so as to facilitate dissolution of the hardening agent.

The invention also provides apparatus for hardening water, comprising a pump having an inlet in communication with a source of water and an outlet in communication with a pipeline; means for the introduction at a controlled rate of carbon dioxide bubbles into a stream of water flowing through the pipeline in operation of the apparatus; means downstream of the carbon dioxide introduction means for introducing at a controlled rate an aqueous slurry of hardening agent into the stream in operation of the apparatus; and means for introducing the resulting liquid containing particles of hardening agent into a body of water to be hardened with sufficient momentum to disperse particles in the body of water and thereby facilitate their dissolution.

The stream of water into which the carbon dioxide and hardening agent are introduced may be taken from the source of the water to be hardened or may be taken from a separate source of water. In either case, it is desirable to know precisely the composition and pH of this stream of water. The source of water to be hardened may be a source of potable or industrial water.

The stream of water is preferably provided at a pressure of 2 to 4 bar absolute by the pump. Dissolution of the carbon dioxide is thereby facilitated.

Carbon dioxide is preferably introduced into the stream of water at a turbulent region thereof. The turbulence is preferably created by a restriction in the pipeline. For example, the carbon dioxide may be introduced into the throat of a venturi disposed in the pipeline. The narrowing of the cross sectional area of the pipeline at the throat of the venturi creates turbulent flow of sufficient energy to break up the carbon dioxide into relatively small bubbles and thereby facilitate its dissolution. Preferably, the carbon dioxide is introduced under pressure into the stream of water. A flow control valve or other means may be used to control the rate of flow of carbon dioxide into the stream.

The hardening agent is preferably lime. The lime is typically supplied in hydrated form, that is as calcium hydroxide. The aqueous slurry preferably contains from 5 to 10% by weight of hydrated lime. The hardening agent is preferably provided as a powder or in other particulate form to prepare the slurry. The aqueous slurry of the hardening agent is preferably introduced into the stream at a location where substantially all the carbon dioxide has been dissolved. The slurry may be introduced into the stream at a controlled rate by means of a pump communicating with a storage vessel for the slurry. In comparison with the known process referred to hereinabove, the capacity of storage vessels for the slurry of hardening agent is substantially smaller.

The relative rates of carbon dioxide and hardening agent into the stream of water are selected so as to give a hardened water of desired quality. The quality may be assessed by any of the indices currently used in the water treatment industry, for example LSI (Langelier Saturation Index). Preferably, the hardened water has an LSI in the range of 0 to +1, and it is sometimes found that, depending on the use to be made of the hardened water, the range 0 to +0.3 is particularly preferred.

Although the introduction of the slurry in the stream typically dilutes the slurry to a point at which all the hardening agent is capable of being dissolved without creating a supersaturated solution, the residence time of the stream in the pipeline downstream of the location where the hardening agent is introduced is insufficient for the hardening agent to dissolve completely. The stream containing residual undissolved hardening agent is typically introduced into the water to be hardened through one or more orifices of a size such that the stream becomes well dispersed in such water and turbulence is created. Typically, the orifice or orifices have a total diameter of from 25 to 75mm.

The method and apparatus according to the invention will now be described by way of example with reference to the accompanying drawings, in which:

Figure 1 is a schematic flow diagram illustrating an apparatus according to the invention; and

Figure 2 is a graph showing the theoretical concentration of carbon dioxide required as a function of final pH of the water to give a 20mg/l increase in alkalinity when a lime addition of 15mg/l of the water to be hardened is made.

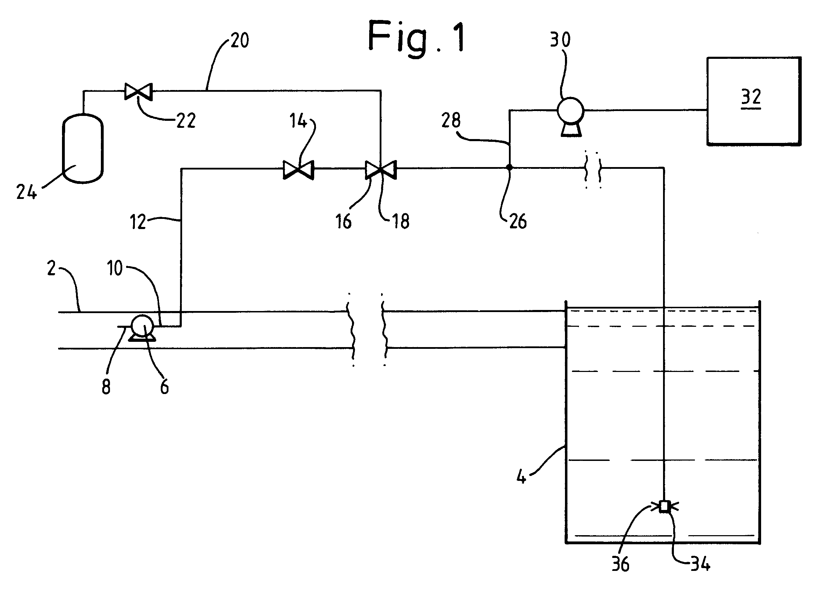

Referring to Figure 1 of the drawings, there is shown a water hardening apparatus which is used to treat water flowing along an open channel 2 into a storage tank 4. A pump 6 is submerged within the water flowing along the channel 2. The pump 6 has an inlet 8 for the water and an outlet 10 communicating with a pipeline 12. A flow control valve 14 is located in the pipeline 12 and may be set to give a desired flow rate of water through the pipeline 12. A venturi 16 is located in the pipeline 12 downstream of the flow control valve 14. The venturi 16 has a throat 18 which communicates with a pipe 20 having a flow control valve 22 disposed therein. The end of the pipe 20 remote from the venturi 18 communicates with a source of gaseous carbon dioxide under pressure. The source of gaseous carbon dioxide under pressure is typically a vessel 24 containing carbon dioxide under pressure in the liquid state. The vessel is fitted with a vaporiser (not shown) operable to generate a flow of pressurised gaseous carbon dioxide.

Downstream of the venturi 16 there is a union 26 between the pipeline 12 and a pipe 28 for the injection of aqueous slurry of particles of hydrated lime into a stream of water flowing along the pipeline 12. The water used to form the slurry is preferably taken from the same source as the water to be hardened. The union 26 is preferably positioned such that it takes about 5 seconds for water to flow from the throat 18 of the venturi 16 to the union 26. The pipe 28 communicates with the outlet of a pump 30 whose inlet communicates with a storage tank 32 for the lime slurry. The length of the pipe 28 is relatively short so as to facilitate pumping of the slurry. The pipeline 12 terminates downstream of the union 26 in an outlet nozzle 34 having at least one orifice 36 formed therein. The nozzle 34 is located near the bottom of the vessel 4 and is submerged within a volume of water held therein. Typically, the orifice or orifices 36 face downwardly or to the sides of the vessel 4. If desired, there may be a considerable extent of pipeline intermediate the union 26 and the nozzle 34. For example, this length of pipeline may be in the order of 50 metres. The final length of the pipeline 12 extends vertically downwards. The velocity of the flow of water through the pipeline 12 is arranged so as to scour any lime particles from the bottom of the pipe so as to enable all the undissolved lime to be kept in suspension. By arranging for the final length of the pipeline to drop vertically into the vessel 4, injection of the stream into the vessel 4 is facilitated and any build up of particles of lime in that length is avoided.

In operation, water is pumped from the channel 2 through the pipeline 12 at a known, controllable rate, and, first, carbon dioxide and, second, an aqueous slurry of hydrated lime of known composition are introduced into the stream at known, controllable, rates. The carbon dioxide is formed into bubbles at the throat 18 of the venturi 16. The bubbles dissolve in the stream of water upstream of the union 26 where the aqueous slurry of lime is introduced. The main flow of water through the channel 2 is to the vessel 4. Hardened water is continuously withdrawn from the vessel 4. The size of the vessel 4 is typically such that the average residence time of the water in it is 15 minutes. There is thus a need to ensure that the stream introduced into the vessel 4 through the nozzle 34 becomes uniformly mixed with the water in the vessel 4 and that all the lime dissolves quickly.

The size of the orifices 36 and the pressure to which the pump 6 subjects the stream of water enable the stream to be introduced with sufficient momentum for it to be dispersed rapidly within the volume of water in the vessel 4 and thus facilitate rapid dispersal and dissolution of the lime. Dissolution of the hydrated lime is further facilitated by the reaction between it and carbon dioxide to form calcium bicarbonate, which is readily solute in water, in accordance with the equation:

$$Ca(OH)_2 + 2CO_2 = Ca(HCO_3)_2.$$

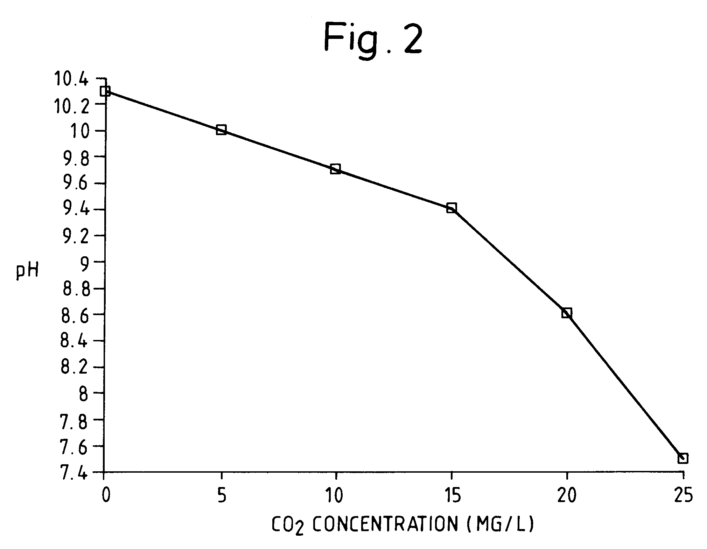

In a typical example of a method according to the invention, the water flowing through the channel 2 into the vessel 4 has a pH of 9.2, contains 63mg/l of calcium ions, has a $M_{alk}$ of 48mg/l and a conductivity of 390 µMHOS. 8% by volume of the flow of water along the channel 2 is diverted to the pipeline 12 by operation of the pump 6. The lime slurry contains 7% by weight of lime and is used to add 15 mg/l of $Ca(OH)_2$ to the water in the vessel 4. It is desired to increase the $M_{alk}$ to 68mg/l and to decrease the pH to 8.0. Accordingly, it can be seen from Figure 2, that the rate of introduction of carbon dioxide into the stream needs to be sufficient to provide 23 mg/l of carbon dioxide to the water to be hardened. The resulting hardened water has a pH of 8.0, an alkalinity of 68 mg/l and an LSI of 0.1. It is therefore neither corrosive nor liable to deposit scale to an appreciable extent.

## Claims

1.  A method of hardening a body of water by the addition thereto of carbon dioxide and a hardening agent able to react with carbon dioxide to form a soluble salt, <u>characterised by</u> introducing carbon dioxide into a stream of water at a controlled rate, forming a dispersion of carbon dioxide bubbles in the stream and allowing the bubbles to dissolve therein, introducing at a controlled rate an aqueous slurry of a hardening agent into the stream, and then introducing the resulting stream into the body of water to be hardened with sufficient momentum to disperse undissolved hardening agent into the body of water so as to facilitate dissolution of the hardening agent.

2. A method as claimed in Claim 1, in which the stream of water is of known composition and pH.

3. A method as claimed in Claim 1 or Claim 2, in which the stream of water is taken from the source of the water to be hardened.

4. A method as claimed in any one of the preceding claims, in which the carbon dioxide is introduced into the stream of water at a turbulent region thereof.

5. A method as claimed in any one of the preceding claims, in which the hardening agent is lime.

6. A method as claimed in Claim 5, in which the lime is in hydrated form.

7. A method as claimed in Claim 6, in which the slurry contains from 5 to 10% by weight of hydrated lime.

8. A method as claimed in any one of the preceding claims, in which it takes a period of time in the range of from 5 to 15 seconds for the stream of water to flow from the region where the carbon dioxide is introduced into it to the region where the aqueous slurry of the hardening agent is introduced into it.

9. Apparatus for hardening a body (4) of water by the addition thereto of carbon dioxide and a hardening agent to form a soluble salt, characterised by a pump (6) having an inlet (8) in communication with a source (2) of water and an outlet (10) in communication with a pipeline (12); means (16, 18, 20, 22, 24) for the introduction at a controlled rate of carbon dioxide bubbles into a stream of water flowing through the pipeline (12) in operation of the apparatus; means (28, 30, 32) for introducing at a controlled rate an aqueous hardening agent downstream (at 26) of the introduction of the carbon dioxide in operation of the apparatus; and a nozzle (34) for introducing the resulting liquid containing particles of hardening agent into the body (4) of water to be hardened with sufficient momentum to disperse the particles in the body (4) of water and thereby facilitate their dissolution.

**Patentansprüche**

1. Ein Verfahren zum Härten einer Wassermasse, indem Kohlendioxid und ein Härteagens dazugegeben werden, das in der Lage ist, mit Kohlendioxid zu reagieren, um ein lösliches Salz zu bilden, gekennzeichnet durch die Schritte,

daß Kohlendioxid in einen Wasserstrom mit einer gesteuerten Rate eingeführt wird, daß eine Dispersion von Kohlendioxidblasen im Strom gebildet und den Blasen gestattet wird, sich darin aufzulösen, daß mit einer gesteuerten Rate ein wässriger Brei eines Härteagens in den Strom eingeführt wird, und daß dann der resultierende Strom in die zu härtende Wassermasse mit ausreichend Impuls eingeführt wird, um nichtaufgelöstes Härteagens in die Wassermasse zu dispergieren und somit Auflösung des Härteagens zu erleichtern.

2. Ein Verfahren wie in Anspruch 1 beansprucht, in welchem Zusammensetzung und pH des Wasserstromes bekannt sind.

3. Ein Verfahren wie in Anspruch 1 oder Anspruch 2 beansprucht, in welchem der Wasserstrom der Quelle des zu härtenden Wassers entnommen wird.

4. Ein Verfahren wie in einem der vorhergehenden Ansprüche beansprucht, in welchem das Kohlendioxid in den Wasserstrom an einer turbulenten Region davon eingeführt wird.

5. Ein Verfahren wie in einem der vorhergehenden Ansprüche beansprucht, in welchem das Härteagens Kalk ist.

6. Ein Verfahren wie in Anspruch 5 beansprucht, in welchem der Kalk in hydrierter Form vorliegt.

7. Ein Verfahren wie in Anspruch 6 beansprucht, in welchem der Brei 5 bis 10 Gewichts-% hydrierten Kalk enthält.

8. Ein Verfahren wie in einem der vorhergehenden Ansprüche beansprucht, in welchem der Wasserstrom einen Zeitraum im Bereich von 5 bis 15 Sekunden benötigt, um von der Region, wo das Kohlendioxid in ihn eingeführt wird, zu der Region zu fließen, wo der wässrige Brei des Härteagens in ihn eingeführt wird.

9. Vorrichtung zum Härten einer Wassermasse (4), indem Kohlendioxid und ein Härteagens dazugegeben werden, um ein lösliches Salz zu bilden, gekennzeichnet durch eine Pumpe (6) mit einem Einlaß (8) in Verbindung mit einer Wasserquelle (2) und einem Auslaß (10) in Verbindung mit einer Rohrleitung (12); Mittel (16, 18, 20, 22, 24) für die Einführung mit einer gesteuerten Rate von Kohlendioxidblasen in einen Wasserstrom, der durch die Rohrleitung (12) fließt, und zwar in Betrieb der Vorrichtung; Mittel (28, 30, 32) zum Einführen mit einer gesteuerten Rate eines wässriges Härteagens stromabwärts (bei 26) der Einführung des Kohlendioxids in Betrieb der Vorrichtung;

und eine Düse (34) zum Einführen der resultierenden Flüssigkeit, die Partikel von Härteagens enthält, in die zu härtende Wassermasse (4) mit ausreichend Impuls, um die Partikel in der Wassermasse (4) zu dispergieren und dadurch ihre Auflösung zu erleichtern.

## Revendications

1. Procédé de durcissement d'un corps d'eau par l'addition à cette eau de dioxyde de carbone et d'un agent durcisseur capable de réagir avec le dioxyde de carbone pour former un sel soluble, procédé caractérisé par l'introduction du dioxyde de carbone dans un courant d'eau à un débit réglé, la formation d'une dispersion de bulles de dioxyde de carbone dans le courant et le fait de laisser les bulles s'y dissoudre, l'introduction dans le courant, à un débit réglé, d'une suspension aqueuse d'un agent durcisseur, puis l'introduction, dans le corps de l'eau à durcir, du courant résultant avec une énergie cinétique suffisante pour disperser dans le corps de l'eau l'agent durcisseur non dissous, de façon à faciliter la dissolution de l'agent durcisseur.

2. Procédé tel que revendiqué à la revendication 1, dans lequel le courant de l'eau a une composition et un pH connus.

3. Procédé tel que revendiqué dans la revendication 1 ou la revendication 2, dans lequel le courant d'eau est prélevé sur la source de l'eau à durcir.

4. Procédé tel que revendiqué dans l'une quelconque des revendications précédentes, dans lequel le dioxyde de carbone est introduit dans le courant d'eau en une région turbulente de ce courant.

5. Procédé tel que revendiqué dans l'une quelconque des revendications précédentes, dans lequel l'agent durcisseur est de la chaux.

6. Procédé tel que revendiqué à la revendication 5, dans lequel la chaux est sous forme hydratée.

7. Procédé tel que revendiqué à la revendication 6, dans lequel la suspension contient de 5 à 10 % en poids de chaux hydratée.

8. Procédé tel que revendiqué dans l'une quelconque des revendications précédentes, dans lequel il faut une période de temps comprise entre 5 et 15 s au courant d'eau pour s'écouler de la région d'introduction du dioxyde de carbone et parvenir dans la région d'introduction de la suspension aqueuse de l'agent durcisseur dans ce corps d'eau.

9. Appareil pour durcir un corps (4) d'eau par l'addition à cette eau de dioxyde de carbone et d'un agent durcisseur pour former un sel soluble, appareil caractérisé en ce qu'il comporte une pompe (6) ayant une entrée (8) qui communique avec une source (2) d'eau et une sortie (10) qui communique avec un pipe-line (12) ; des moyens (16, 18, 20, 22, 24) pour l'introduction à un débit réglé de bulles de dioxyde de carbone dans un courant d'eau circulant dans le pipe-line (12) lors du fonctionnement de l'appareil ; des moyens (28, 30, 32) pour introduire à un débit réglé un agent durcisseur aqueux, l'introduction étant réalisée en aval (en 26) de l'introduction du dioxyde de carbone lors du fonctionnement de l'appareil ; et une buse (34) pour introduire le liquide résultant, contenant des particules de l'agent durcisseur, dans le corps (4) d'eau à durcir, l'introduction étant réalisée avec une énergie cinétique suffisante pour disperser les particules dans le corps (4) d'eau et faciliter ainsi la dissolution des particules.

# Fig.1

EP 0 520 826 B1

# Fig. 2

pH (y-axis) vs. $CO_2$ CONCENTRATION (MG/L) (x-axis)

EP 0 520 826 B1